(19) **Europäisches Patentamt / European Patent Office / Office européen des brevets**

(11) **EP 4 592 769 A1**

(12) **EUROPEAN PATENT APPLICATION**

(43) Date of publication:
**30.07.2025 Bulletin 2025/31**

(21) Application number: **24215943.2**

(22) Date of filing: **27.11.2024**

(51) International Patent Classification (IPC):
**G05B 13/02** (2006.01)

(52) Cooperative Patent Classification (CPC):
**G05B 13/0265**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.01.2024 CN 202410105014**

(71) Applicants:
- **Zhejiang Hengyi Petrochemical Co., Ltd.**
  **Zhejiang 311200 (CN)**
- **Haining Hengyi New Materials Co., Ltd.**
  **Jiaxing City, Zhejiang 314415 (CN)**

(72) Inventors:
- **WANG, Peng**
  **Zhejiang, 311200 (CN)**

- **PENG, Xiantao**
  **Zhejiang, 311200 (CN)**
- **QIU, Yibo**
  **Zhejiang, 311200 (CN)**
- **JIN, Junliang**
  **Zhejiang, 311200 (CN)**
- **WU, Zhongliang**
  **Zhejiang, 311200 (CN)**
- **LI, Dake**
  **Zhejiang, 311200 (CN)**
- **XU, Feng**
  **Zhejiang, 31120 (CN)**

(74) Representative: **EIP**
**Fairfax House**
**15 Fulwood Place**
**London WC1V 6HU (GB)**

(54) **CONTROL METHOD FOR TEXTURING PROCESS, TRAINING METHOD FOR CONTROL NETWORK AND RELATED APPARATUSES**

(57) Provided is a control method for a texturing process, a training method for a control network and related apparatuses. The control method includes: sequentially collecting preset control parameters of a plurality of moments in the texturing process to obtain a first sequence (S201); inputting the first sequence into a parameter prediction model to predict prediction parameters of a plurality of future moments (S202); selecting a target parameter of a target moment from the prediction parameters (S203); building a second sequence containing the target parameter based on the control parameters before and after the target moment (S204); processing the second sequence based on an index prediction model to obtain an index prediction result (S205); and inputting the result into a data generation model in a case where the result does not meet a desired value, to obtain a desired control parameter for the target moment (S206).

FIG. 2

**Description**

TECHNICAL FIELD

The present disclosure relates to a field of data processing technologies, and in particular, to a control method for a texturing process, a training method for a control network and related apparatuses.

BACKGROUND

In a texturing process, a Pre Oriented Yarn (POY), also known as a POY raw yarn, is processed into a Draw Textured Yarn (DTY), and the DTY is wound on a drum to form a DTY yarn spindle for subsequent transportation and management.

There are many controlled components in the texturing process, and parameter settings and control of corresponding components have an important impact on the quality of the final yarn spindle.

SUMMARY

The present disclosure provides a control method for a texturing process, a training method for a control network and related apparatuses to improve the texturing process.

According to an aspect of the present disclosure, provided is a control method for a texturing process, including:

sequentially collecting preset control parameters of a plurality of moments in the texturing process to obtain a first control parameter sequence;

inputting the first control parameter sequence into a parameter prediction model to predict prediction parameters of a plurality of future moments;

selecting a target parameter of a target moment from the prediction parameters of the plurality of moments;

building a second control parameter sequence containing the target parameter based on control parameters of a plurality of moments before and after the target moment;

processing the second control parameter sequence based on an index prediction model to obtain an index prediction result; and

inputting the index prediction result into a data generation model in a case where the index prediction result does not meet a desired value, to obtain a desired control parameter for the target moment.

According to another aspect of the present disclosure, provided is a training method for a control network of a texturing process, where the control network includes a parameter prediction subnetwork, an index prediction subnetwork and a data generation subnetwork, and the method includes:

obtaining a first training sample, where the first training sample includes preset control parameters of a plurality of moments in the texturing process;

inputting the first training sample into the parameter prediction subnetwork, to obtain a parameter prediction value of at least one future moment;

processing the parameter prediction value based on the index prediction subnetwork, to obtain a prediction index;

determining a training loss based on a difference between the prediction index and a true index, and a difference between the parameter prediction value and a true parameter value;

adjusting the parameter prediction subnetwork and the index prediction subnetwork based on the training loss;

obtaining a parameter prediction model corresponding to the parameter prediction subnetwork and an index prediction model corresponding to the index prediction subnetwork, in a case where a training convergence condition is met; and

training the data generation subnetwork based on the parameter prediction model and the index prediction model, to obtain a data generation model, where the data generation model is used to generate desired control parameters of a texturing machine according to an index prediction result output by the index prediction model.

According to still another aspect of the present disclosure, provided is a control apparatus for a texturing process, including:

a collection unit for sequentially collecting preset control parameters of a plurality of moments in the texturing process to obtain a first control parameter sequence;

a parameter prediction unit for inputting the first control parameter sequence into a parameter prediction model to predict prediction parameters of a plurality of future moments;

a selection unit for selecting a target parameter of a target moment from the prediction parameters of the plurality of moments;

a building unit for building a second control parameter sequence containing the target parameter based on control parameters of a plurality of moments before and after the target moment;

an index prediction unit for processing the second control parameter sequence based on an index prediction model to obtain an index prediction result; and

a data generation unit for inputting the index prediction result into a data generation model in a case where the index prediction result does not meet a desired value, to obtain a desired control parameter for the target moment.

According to yet still another aspect of the present disclosure, provided is a training apparatus for a control network of a texturing process, where the control network includes a parameter prediction subnetwork, an index prediction subnetwork and a data generation subnetwork, and the training apparatus includes:

an obtaining unit for obtaining a first training sample, where the first training sample includes preset control parameters of a plurality of moments in the texturing process;

an input unit for inputting the first training sample into the parameter prediction subnetwork to obtain a parameter prediction value of at least one future moment;

a processing unit for processing the parameter prediction value based on the index prediction subnetwork to obtain a prediction index;

a training loss unit for determining a training loss based on a difference between the prediction index and a true index, and a difference between the parameter prediction value and a true parameter value;

an adjusting unit for adjusting the parameter prediction subnetwork and the index prediction subnetwork based on the training loss;

a first generation unit for obtaining a parameter prediction model corresponding to the parameter prediction subnetwork and an index prediction model corresponding to the index prediction subnetwork in a case where a training convergence condition is met; and

a second generation unit for training the data generation subnetwork based on the parameter prediction model and the index prediction model, to obtain a data generation model, where the data generation model is used to generate desired control parameters of a texturing machine according to an index prediction result output by the index prediction model.

According to yet still another aspect of the present disclosure, provided is an electronic device, including:

at least one processor; and

a memory connected in communication with the at least one processor; where,

the memory stores an instruction executable by the at least one processor, and the instruction, when executed by the at least one processor, enables the at least one processor to execute the method of any embodiment of the present disclosure.

According to yet still another aspect of the present disclosure, provided is a non-transitory computer-readable storage medium storing a computer instruction, where the computer instruction is used to cause a computer to execute the method of any embodiment of the present disclosure.

According to yet still another aspect of the present disclosure, provided is a computer program product including a computer program, where the computer program, when executed by a processor, implements the method of any embodiment of the present disclosure.

According to embodiments of the present disclosure, the preset control parameter is collected, the future parameter is predicted using the parameter prediction model, the target parameter is selected, and the second control parameter sequence is built. The second control parameter sequence is processed using the index prediction model to obtain the index prediction result, and if the desired value is not met, the desired control parameter is obtained using the data generation model to adjust the parameter in the texturing process.

It should be understood that the content described in this part is not intended to identify critical or essential features of embodiments of the present disclosure, nor is it used to limit the scope of the present disclosure. Other features of the present disclosure will be easily understood through the following description.

BRIEF DESCRIPTION OF THE DRAWINGS

The accompanying drawings are used to better understand the present solution, and do not constitute a limitation to the present disclosure.

FIG. 1 is a schematic diagram of a texturing machine according to an embodiment of the present disclosure;

FIG. 2 is a schematic flow diagram of a control method for a texturing process according to an embodiment of the present disclosure;

FIG. 3 is a schematic flow diagram of a training method for a control network of a texturing process according to an embodiment of the present disclosure;

FIG. 4 is a schematic structural diagram of a training parameter prediction subnetwork according to an embodiment of the present disclosure;

FIG. 5 is a schematic flow diagram of obtaining a texturing process architecture diagram according to an embodiment of the present disclosure;

FIG. 6 is a schematic diagram of a texturing process architecture diagram obtained by a second control parameter sequence according to an embodiment of the present disclosure;

FIG. 7 is a schematic flow diagram of a feature extraction module according to an embodiment of the present disclosure;

FIG. 8 is a schematic structural diagram of a control apparatus for a texturing process according to an embodiment of the present disclosure;

FIG. 9 is a schematic structural diagram of a training apparatus for a control network of a texturing process according to an embodiment of the present disclosure;

FIG. 10 is a block diagram of an electronic device for implementing a control method for a texturing process and a training method for a control network according to an embodiment of the present disclosure.

DETAILED DESCRIPTION

Hereinafter, descriptions to example embodiments of the present disclosure are made with reference to accompanying drawings, include various details of the embodiments of the present disclosure to facilitate understanding, and should be considered as merely exemplary. Therefore, those having ordinary skill in the art should realize, various changes and modifications may be made to the embodiments described herein, without departing from the scope of the present disclosure. Likewise, for clarity and conciseness, descriptions of well-known functions and structures are omitted in the following descriptions.

In addition, it should be noted that terms "first", "second", etc. in the specification, claims and the above attached drawings of the present application are used to distinguish similar objects, and are not necessarily used to describe a specific order or sequence. It should be understood that the objects used in this way can be interchanged where appropriate, so that the embodiments of the present application described herein can be implemented in an order other than those illustrated or described herein. The embodiments described in the following exemplary embodiments do not represent all embodiments consistent with the present application. Instead, they are only examples of apparatuses and methods consistent with some aspects of the present application as detailed in the attached claims.

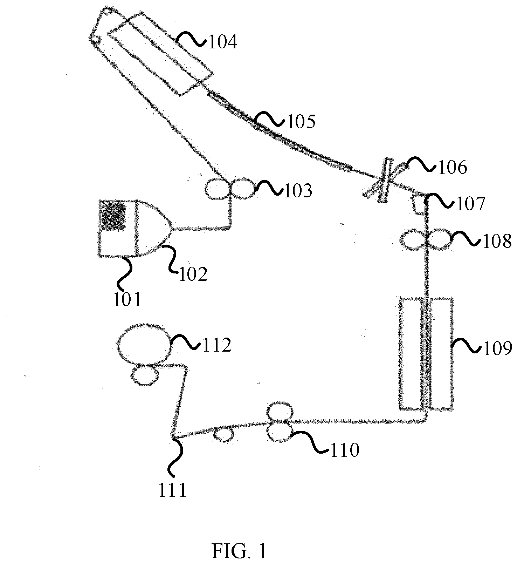

A schematic diagram of a possible texturing machine is shown in FIG. 1. The texturing machine may include a raw yarn rack 101, a slitter 102, a first roller 103, a first heat box 104, a cooling plate 105, a false twist component 106, a nozzle 107, a second roller 108, a second heat box 109, a third roller 110, a broken end detection component 111 and a winding component 112.

Where the first roller 103, the second roller 108 and the third roller 110 may be used to ensure that the yarn is processed according to a predetermined path. In the texturing process, the speeds of the first roller 103, the second roller 108 and the third roller 110 are matched with each other to ensure that the silk fabric is not broken or stacked.

According to requirements of the product form, the nozzle 107 may be used to process the yarn processed by the false twist component 106 into a net-shaped yarn to ensure the touch and form required by different yarns.

In the case of producing a high-elastic yarn, the second heat box 109 may be not used. In the case of producing a medium-elastic yarn, the temperature of the second heat box 109 may be adjusted to a first preset temperature. For example, the first preset temperature may be about 140 °C. In the case of producing a low-elastic yarn, the temperature of the second heat box 109 may be adjusted to a second preset temperature. For example, the second preset temperature may be between 165 °C and 195 °C.

When the broken end detection component 111 detects a broken end, the slitter 102 may be triggered to cut the yarn to avoid the accumulation of POY raw yarn in a subsequent process.

In the texturing process, at least one of the following core control parameters may be included, such as:

1) Vehicle speed, that is, a speed of the second roller 108.

2) Draft ratio, that is, a ratio of the speed of the second roller 108 to the speed of the first roller 103.

3) Second overfeed, that is, a ratio of a speed difference between the third roller 110 and the second roller 108 to the speed of the second roller 108.

4) False twist ratio, that is, a ratio of the disc speed in the false twist component 106 to the vehicle speed.

5) Oil tanker speed, that is, an oiling rotation speed of the oil tanker, which is located between the third roller 110 and the winding component 112 and is used to oil the yarn.

6) Full winding time, that is, time required for the winding component 112 to fully wind a spindle of yarn.

7) H1 upper heat box temperature, that is, the temperature of the deformation heat box (i.e., the first heat box 104).

8) H2 lower heat box temperature, that is, the temperature of the shaping heat box (i.e., the second heat box 109).

9) Air pressure value, that is, the air pressure value required for the nozzle 107 to make a network.

Of course, the above parameters are only examples. When implementing, corresponding key parameters may be determined according to the specific situation.

The impact of the texturing process on the quality of DTY yarn spindle is a complex systemic problem. Unreasonable texturing process parameters may cause some defects in the final product. Therefore, a method is needed to optimize the texturing process so that problems can be found and dealt with in time during a production process, thereby improving product quality and production efficiency.

In view of this, the embodiment of the present disclosure provides a control method for a texturing process to solve the above problems.

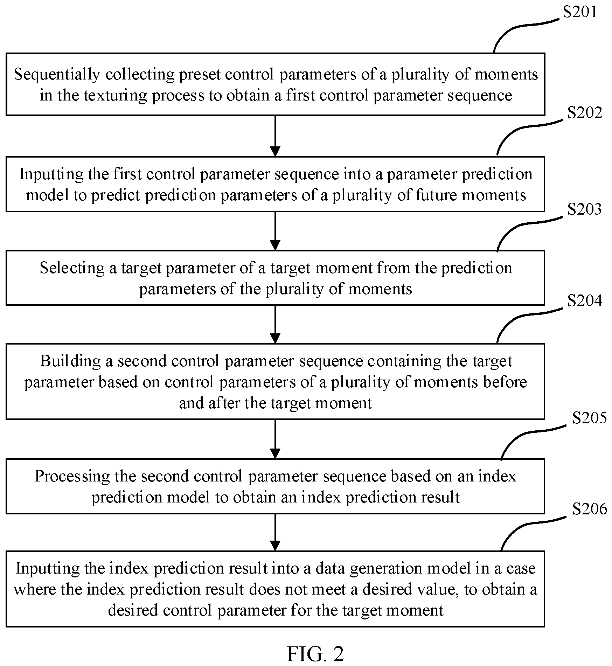

As shown in FIG. 2, the control method for the texturing process according to the embodiment of the present disclosure may include the following steps.

S201, preset control parameters of a plurality of moments in the texturing process are sequentially collected to obtain a first control parameter sequence.

In the embodiment of the present disclosure, the preset control parameters may include vehicle speed, draft ratio, second overfeed, false twist ratio, oil tanker speed, full winding time, H1 upper hot box temperature, H2 lower hot box temperature, air pressure value, etc.

S202, the first control parameter sequence is input into a parameter prediction model to predict prediction parameters of a plurality of future moments.

S203, a target parameter of a target moment is selected from the prediction parameters of the plurality of moments.

S204, a second control parameter sequence containing the target parameter is built based on control parameters of a plurality of moments before and after the target moment.

S205, the second control parameter sequence is processed based on an index prediction model to obtain an index prediction result.

S206, the index prediction result is input into a data generation model in a case where the index prediction result does not meet a desired value, to obtain a desired control parameter for the target moment.

In the embodiment of the present disclosure, the preset control parameters of the plurality of moments in the texturing process may be collected and then input into the parameter prediction model as the first control parameter sequence to predict the prediction parameters of the plurality of future moments. Then, the target parameter of the target moment may be selected from these prediction parameters. Based on the control parameters of the plurality of moments before and after the target moment, the second control parameter sequence containing the target parameters may be built. By processing the second control parameter sequence using the index prediction model, the index prediction result of the future target moment may be predicted. If the index prediction result does not meet the desired value, the problem of a future possible parameter may be found in time, and then the index prediction result may be input into the data generation model to obtain the desired control parameters for the future target moment. By predicting and adjusting the control parameters, it helps optimize the texturing process and ensure that the quality of the final product meets expectations as much as possible.

For a better understanding, the following is an introduction from two aspects of model training and model use:

1. Model training

In embodiments of the present disclosure, the aforementioned parameter prediction model, index prediction model and data generation model may be obtained by training the control network. The control network may include a parameter prediction subnetwork for training and generating the corresponding parameter prediction model, an index prediction subnetwork for training and generating the corresponding index prediction model and a data generation subnetwork for training and generating the corresponding data generation model.

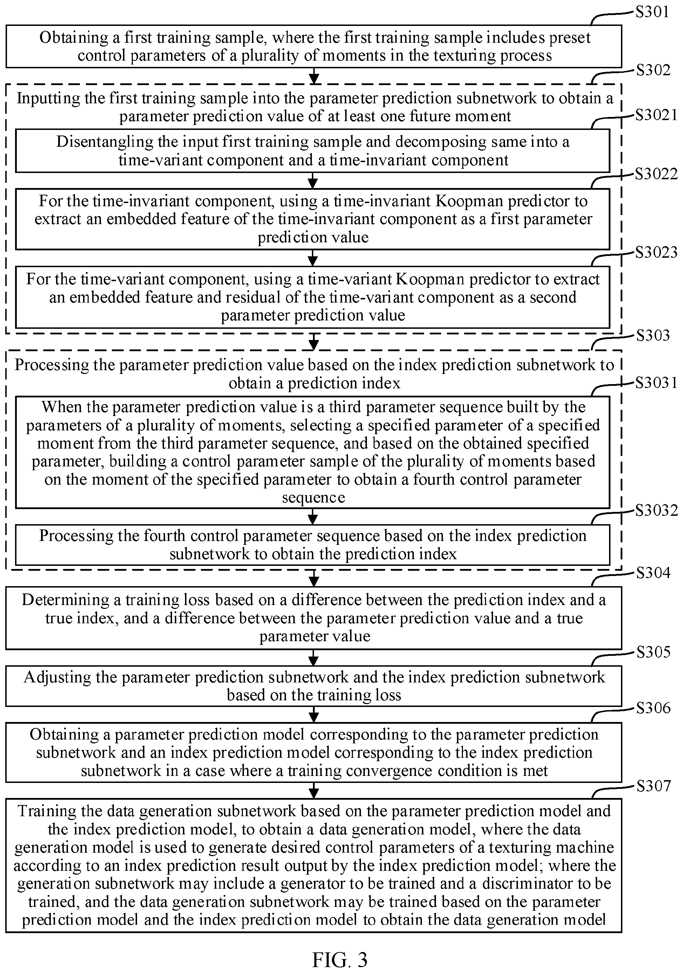

Accordingly, an embodiment of the present disclosure provides a training method for a control network of a texturing process. As shown in FIG. 3, the method may include the following steps.

S301, a first training sample is obtained. The first training sample includes preset control parameters of a plurality of moments in the texturing process.

For example, data collection may be performed on key parameters in an actual texturing process, and a plurality of preset control parameters in the texturing process may be obtained for the same moment. These preset control parameters may be the key parameters in the texturing process.

A first training sample corresponding to moment t may be built with moment t as the center. For example, preset control parameters corresponding to L moments may be selected to form the first training sample. For example, preset control parameters corresponding to moments t-2, t-1, t, t+1 and t+2 may be selected to form the first training sample.

Therefore, a corresponding first training sample may be built for each sampling moment.

S302, the first training sample is input into the parameter prediction subnetwork to obtain a parameter prediction value of at least one future moment.

In embodiments of the present disclosure, a Koopman time sequence model may be selected as the parameter prediction subnetwork. The specific training steps may include the following steps.

S3021, the input first training sample is disentangled and decomposed into a time-variant component and a time-invariant component.

For example, if the length of the training sample is T, Fourier transform may be performed on each sequence to obtain an amplitude corresponding to each frequency in a spectrum set S = {0, 1, ..., {T/2}}. For each frequency, the amplitude corresponding to the frequency may be averaged to obtain a main frequency size of a sample population (the frequency with a high average amplitude may be used as the main frequency). The set $\mathcal{G}_\alpha$ of $\alpha\%$ of frequencies with high average amplitudes may be selected as the time-invariant component $X_{\text{inv}}$, and the remaining may be used as the time-variant component $X_{\text{var}}$. The specific steps may be shown in formula (1):

$$X_{\text{inv}} = \mathcal{F}^{-1}\big(\text{Filter}(\mathcal{G}_\alpha, \mathcal{F}(X))\big)$$
$$X_{\text{var}} = \mathcal{F}^{-1}\left(\text{Filter}\left(\bar{\mathcal{G}}_\alpha, \mathcal{F}(X)\right)\right) = X - X_{\text{inv}} \qquad (1)$$

In formula (1), $\mathcal{F}$ represents fast Fourier transform (FFT), $\mathcal{F}^{-1}$ is its inverse, Filter( ) only transmits a spectrum corresponding to the input, and X represents each sample parameter in a training sample.

S3022, for the time-invariant component, a time-invariant Koopman predictor is used to extract an embedded feature of the time-invariant component as a first parameter prediction value.

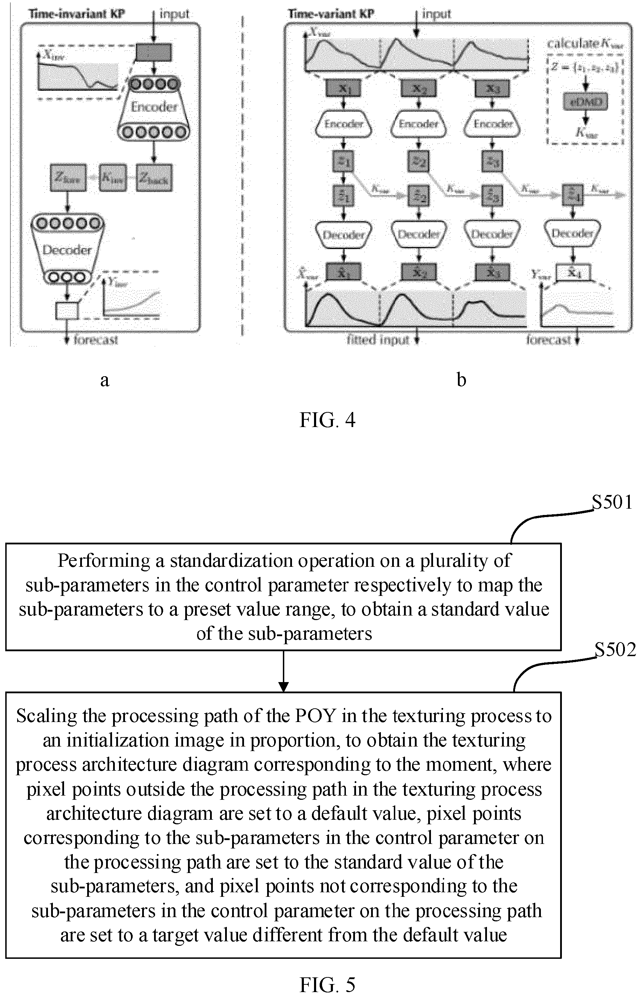

As shown in a of FIG. 4, the time-invariant component may be input into the time-invariant Koopman predictor, and the time-invariant component may be mapped to a latent space of $R^D$ through an encoder, that is, as shown in formula (2):

$$Z_{\text{back}} = \text{Encoder}(X_{\text{inv}}) \qquad (2)$$

Then, the learnable matrix $K_{\text{inv}}$ of size $R^{D \times D}$ may be used to make a transformation in the latent space, that is,

$$Z_{\text{fore}} = K_{\text{inv}}Z_{\text{back}} \qquad (3)$$

Finally, the decoder may be used to map to $R^{H \times C}$, that is

$$Y_{\text{inv}} = \text{Decoder}(Z_{\text{fore}}) \qquad (4)$$

$Y_{\text{inv}}$ is the first parameter prediction value of the future moment.

S3023, for the time-variant component, a time-variant Koopman predictor is used to extract an embedded feature and residual of the time-variant component as a second parameter prediction value.

As shown in b of FIG. 4, the time-variant component may be input into the time-variant Koopman predictor. In order to improve processing efficiency, the input time-variant component may be divided into a plurality of segments of length S (three segments are used as an example in the FIG. 4), each segment is marked as $X_j$, and $X_j$ is taken from any element in all segments, as shown in formula (5):

$$X_j = [X_{(j-1)S+1}, \ldots, X_{jS}]^T \in R^{S \times C}, \ j = 1, 2, \ldots, T/S \qquad (5)$$

In formula (5), $X_j$ represents a time-variant component of each of the divided segments.

Then, a pair of encoder/decoder may be used to learn a transformation to a high-dimensional linear system, that

is,

$$Z_j = \text{Encoder}(X_j), \ \hat{X}_j = \text{Decoder}(\hat{Z}_j) \qquad (6)$$

In formula (6), $Z_j$ represents a feature obtained by a corresponding encoder for the corresponding segment, and $X_j$ represents a new variable obtained by decoding $Z_j$.

According to the obtained features, a time-variant operator may be obtained using a data-driven modal decomposition algorithm (EDMD), as shown in formula (7):

$$Z_{\text{back}} = [Z_1, Z_2, \ldots, Z_{T/S-1}], Z_{\text{fore}} = [Z_2, Z_3, \ldots, Z_{T/S}], K_{\text{var}} = Z_{\text{fore}}Z_{\text{back}} \qquad (7)$$

Based on the obtained operator, a fitting result may be calculated for a dynamic system observed historically, as shown in formula (8):

$$[\hat{Z}_1, \hat{Z}_2, \ldots, \hat{Z}_{T/S}] = [Z_1, K_{\text{var}}Z_1, \ldots, K_{\text{var}}Z_{T/S-1}] = [Z_1, K_{\text{var}}Z_{\text{back}}] \qquad (8)$$

Further extrapolation may be used to obtain the future prediction result $Z_{T/S+t}$, as shown in formula (9):

$$Z_{T/S+t} = (K_{\text{var}})^T Z_{T/S}, t = 1, 2, \ldots, H/S \qquad (9)$$

Finally, these segments are recombined to obtain a fitting output and a sequence prediction of the module, as shown in formula (10):

$$\hat{X}_{\text{var}} = [\hat{X}_1, \ldots, \hat{X}_{T/S}]^T; \ Y_{\text{var}} = [\hat{X}_{T/S+1}, \ldots, \hat{X}_{T/S+H/S}]^T \qquad (10)$$

In formula (10), $X_{\text{var}}$ is input data of a next KoopaBlock layer, and $Y_{\text{var}}$ is a second parameter prediction value of the future moment.

The above S3022 and S3023 are in no particular order, and may be performed simultaneously in some cases.

S303, the parameter prediction value is processed based on the index prediction subnetwork to obtain a prediction index. The implementation steps are as follows.

S3031, when the parameter prediction value is a third parameter sequence built by the parameters of a plurality of moments, a specified parameter of a specified moment is selected from the third parameter sequence, and based on the obtained specified parameter, a control parameter sample of the plurality of moments based on the moment of the specified parameter is built to obtain a fourth control parameter sequence.

S3032, the fourth control parameter sequence is processed based on the index prediction subnetwork to obtain the prediction index.

In some embodiments, a corresponding texturing process architecture diagram may be generated based on the control parameter of each moment in the fourth control parameter sequence to obtain a plurality of texturing process architecture diagrams, and the plurality of texturing process architecture diagrams may be input into the index prediction subnetwork to obtain the prediction index.

Where, for the control parameter of each moment in the obtained fourth control parameter sequence, the following operations (including steps A1-A2) may be performed respectively to generate the corresponding texturing process architecture diagram.

Step A1, a standardization operation is performed on a plurality of sub-parameters in the control parameter respectively to map the sub-parameters to a preset value range, to obtain a standard value of the sub-parameters.

Step A2, the processing path of the POY in the texturing process is scaled to an initialization image in proportion to obtain the texturing process architecture diagram corresponding to the moment.

Where, pixel points outside the processing path in the texturing process architecture diagram are set to the default value, pixel points corresponding to the sub-parameters in the control parameter on the processing path are set to the standard value of the sub-parameters, and pixel points not corresponding to the sub-parameters in the control parameter on the processing path are set to a target value different from the default value.

The aforementioned step S3032 may be implemented as the following steps B1-B4.

Step B1, based on a short-term feature extraction module built based on the attention mechanism for the index prediction subnetwork, feature extraction is performed within a third feature extraction range in a plurality of texturing process architecture diagrams to obtain short-term features, where the third feature extraction range may include texturing process architecture diagrams of n moments centered on the texturing process architecture diagram of the target moment, and n is a positive integer. The short-term feature extraction module may use the texturing process architecture diagram of the target moment as a query feature, and use the texturing process architecture diagrams of n moments other than the target moment as key features and value features to obtain short-term features.

Step B2, based on the long-term feature extraction module built based on the attention mechanism for the index prediction subnetwork, feature extraction is performed within a fourth feature extraction range in a plurality of texturing process architecture diagrams to obtain long-term features, where the fourth feature extraction range may include the texturing process architecture diagrams of m moments centered on the texturing process architecture diagram of the target moment, and m is a positive integer greater than n. The long-term feature extraction module is used to divide the texturing process architecture diagrams of m moments using a sliding window mechanism and determine pooling information in each sliding window, and build key features and value features required by an attention mechanism based on the pooling information of a plurality of sliding windows, to obtain long-term features based on the key features, value features, and query features.

Step B3, a fusion operation is performed on the long-term feature and the short-term feature using a fusion module to obtain a fused feature.

Step B4, the fused features are processed based on the prediction module of the index prediction subnetwork to obtain the prediction index.

In order to make the prediction index result obtained by processing the parameter prediction value through the index prediction subnetwork more accurate, the index prediction subnetwork may also include a supplementary feature extraction module. The supplementary feature extraction module may perform the following operations (including steps C1-C4) based on the obtained parameter prediction value to obtain supplementary features.

Step C1, data analysis is performed on the obtained fourth control parameter sequence, to obtain a parameter cumulative difference of each moment in the fourth control parameter sequence relative to the first moment in the fourth control parameter sequence, so as to obtain a cumulative difference sequence. The parameter of the first moment is a first control parameter in the fourth control parameter sequence.

Step C2, based on the cumulative difference sequence, a duration of the moment when the cumulative difference is greater than a preset threshold relative to the first moment in the fourth control parameter sequence is determined, to obtain a duration sequence.

Step C3, feature extraction is performed on the obtained fourth control parameter sequence, the cumulative difference sequence and the duration sequence to obtain the supplementary features.

Step C4, a fusion operation is performed on the long-term features, the short-term features, and the supplementary features using the fusion module to obtain fusion features.

S304, a training loss is determined based on a difference between the prediction index and a true index and a difference between the parameter prediction value and a true parameter value.

S305, a parameter prediction subnetwork and an index prediction subnetwork are adjusted based on the training loss.

S306, a parameter prediction model corresponding to the parameter prediction subnetwork and an index prediction model corresponding to the index prediction subnetwork are obtained in a case where a training convergence condition is met.

In embodiments of the present disclosure, a mean square error may be used as a loss function to measure a difference between the prediction index and the true index, and the difference between the parameter prediction value and the true parameter value, so as to adjust the parameter prediction subnetwork and the index prediction subnetwork. Finally, the model may be iteratively trained and the model performance may be evaluated using a validation set or a test set. Under the condition that the requirements are met, the adjusted parameter prediction subnetwork may be determined as the parameter prediction model, and the adjusted index prediction subnetwork may be determined as the index prediction model.

S307, the data generation subnetwork is trained based on the parameter prediction model and the index prediction model, to obtain a data generation model, where the data generation model is used to generate desired control parameters of a texturing machine according to an index prediction result output by the index prediction model. Where the generation subnetwork may include a generator to be trained and a discriminator to be trained, and the data generation subnetwork may be trained based on the parameter prediction model and the index prediction model to obtain the data generation model.

In order to make the obtained data generation model accurate, training needs to be performed on the data generation subnetwork for many loops. The following operations (including steps D1-D4) may be performed in each loop of training:

Step D1, inputting the true control parameter to the discriminator to be trained to obtain a first discrimination result of the discriminator on the true control parameter;

Step D2, using the generator to be trained to generate a false control parameter;

Step D3, inputting the false control parameter into the discriminator to be trained to obtain a second discrimination result; and

Step D4, adjusting the model parameter of the discriminator to be trained based on the first discrimination result and the second discrimination result.

For example, the false control parameter may be generated using the generator to be trained, and the generated false control parameter may be combined with the true control parameter to form a true-false data set. Based on the formed true-false data set, the parameter of the generator may be remained unchanged, and the discriminator to be trained may be trained. For example, given a random training sample, the discriminator to be trained may be trained to determine whether it is a true control parameter or a false sample generated by the generator to be trained. The true control parameter may be input into the discriminator to be trained, and the obtained discrimination result may be used as a true result. The obtained false control parameter may be input into the discriminator to be trained, and the obtained discrimination result may be used as a false result. The discriminator to be trained may be trained with reference to the true result and the false result.

Step D5, the model parameter of the discriminator to be trained is kept unchanged and the generator to be trained is trained.

After the training of the discriminator to be trained is completed, the generator to be trained is connected in series with the trained discriminator to be trained, the parameter of the discriminator to be trained may be kept unchanged, and the generator to be trained may be trained. The generator to be trained may be given a prediction index output by the index prediction model to obtain the control parameter generated by the generator to be trained, and the generated control parameter may be input into the discriminator to be trained for judgment. Based on the judgment result of the discriminator to be trained, as the processing object of the loss function, a loss value may be generated, and the parameter of the generator to be trained may be updated based on the loss value.

After the training of the generator to be trained is completed, the parameter of the generator to be trained may be remained unchanged again, and the discriminator to be trained may be trained. The above process may be repeated until the generator to be trained may generate sufficiently true data, so that the discriminator to be trained cannot accurately distinguish true data and false data. Thus, a data generation model may be obtained.

In embodiments of the present disclosure, the prediction parameter generated by the parameter prediction model and the index prediction result generated by the index prediction model may be processed by training the generator and the discriminator to obtain the data generation model, which provides high optimization efficiency for the parameters in the texturing process.

In embodiments of the present disclosure, the parameter prediction subnetwork may be trained by the first training sample to obtain the parameter prediction value. The index prediction subnetwork may be trained based on the obtained parameter prediction value to obtain the index parameter. The prediction subnetwork and the index prediction subnetwork may be adjusted by determining the training loss to obtain the parameter prediction model and the index prediction model. Based on this, the data generation subnetwork may be trained to obtain the data generation model. The final prediction model may be obtained by training the subnetworks, thereby improving optimization efficiency of the parameter in the texturing process.

2. Model Use

POY may complete a texturing process operation through the yarn processing path to obtain the desired DTY yarn. The entire yarn processing path may be designed according to the texturing process of the texturing machine. In the entire process of the yarn, in addition to the process of the corresponding key link, some mechanical properties of the texturing machine, and the processing process of the POY on the yarn processing path may also affect the final quality of the yarn. In order to explore potential hidden features that affect the quality of DTY, in embodiments of the present disclosure, the second control parameter sequence may be processed based on the index prediction model to obtain the index prediction result, which may be implemented as follows: based on the control parameter of each moment in the second control parameter sequence, a corresponding texturing process architecture diagram may be generated to obtain a plurality of texturing process architecture diagrams, and then the plurality of texturing process architecture diagrams may be input into the index prediction model to obtain the index prediction result.

In embodiments of the present disclosure, the texturing process architecture diagram may reflect the yarn processing path of the yarn in the texturing machine and the key parameter of the key link. Therefore, by combining the predicted control data with the path of the texturing process of the texturing machine and converting same into a diagram, potential features and associations may be explored to facilitate the prediction of the quality of future moments.

During implementation, the generation of the texturing process architecture diagram may be the same as that of the training model. As shown in FIG. 5, for the control parameter of each moment in the second control parameter sequence, the following operations as shown in FIG. 5 may be performed respectively to generate the corresponding texturing process architecture diagram.

S501, a standardization operation is performed on a plurality of sub-parameters in the control parameter respectively to map the sub-parameters to a preset value range, to obtain a standard value of the sub-parameters.

For example, for each sub-parameter, maximum and minimum values may be calculated to determine a range of the sub-parameters.

The standardization operation for the sub-parameter may be calculated using the following formula:

$$y = (x - min) / (max - min) \qquad (11)$$

In formula (11), y represents a new value in the range of [0, 1] to which each data point in the subparameter is converted from its original range, x represents each subparameter, min represents a minimum value in the subparameter, and max represents a maximum value in the subparameter.

In order to reduce the calculation amount in a subsequent training process, the calculated new value may be mapped to a preset value range. In the embodiment, the preset value range is from 0 to 255. Therefore, the standardized value may be multiplied by 255 and added to 0, to obtain a value in the range of 0-255.

S502, the processing path of the POY in the texturing process is scaled to an initialization image in proportion, to obtain the texturing process architecture diagram corresponding to the moment, where pixel points outside the processing path in the texturing process architecture diagram are set to the default value, pixel points corresponding to the sub-parameters in the control parameter on the processing path are set to the standard value of the sub-parameters, and pixel points not corresponding to the sub-parameters in the control parameter on the processing path are set to a target value different from the default value.

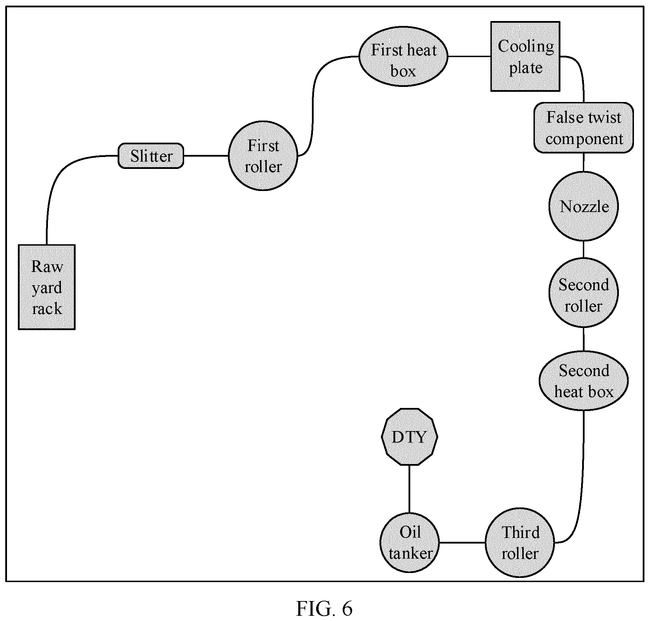

In embodiments of the present disclosure, the default value may be set to 255 as the value of the pixel point outside the processing path in the initialization image, the target value may be set to 0 as the value of the pixel point not corresponding to the sub-parameter in the control parameters on the processing path, the remaining values may be used as the values of the pixel point corresponding to the sub-parameter in the control parameters on the processing path, and the texturing process architecture diagram shown in FIG. 6 may be obtained. It can be understood as scaling the entire process of the texturing process and the corresponding component to the initial image, and the values of the key link in the figure may represent the process parameters of this link.

In embodiments of the present disclosure, by performing a standardization operation on the plurality of sub-parameters in the second control parameter sequence, so as to map to a preset value interval, the standard value may be obtained. Then, the processing path of the POY in the texturing process may be scaled to the initialization image in proportion. The pixel points outside the processing path in the initialization image are set to the default value, the pixel points corresponding to the sub-parameters in the control parameter on the processing path are set to the standard value of the sub-parameter, and the pixel points not corresponding to the sub-parameters are set to the target value different from the default value. In this way, the texturing process architecture diagram may be obtained. By converting the real-time control parameter into a graphical representation, a good data foundation may be provided for the subsequent index prediction model to explore potential features and correlations.

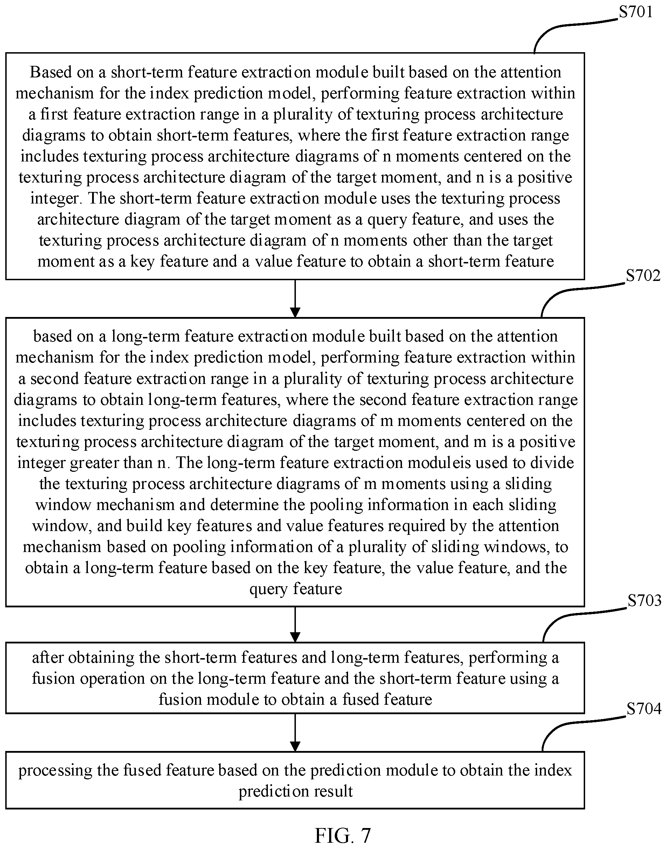

In some embodiments, in order to better explore features and improve accuracy of index prediction, a plurality of texturing process architecture diagrams may be input into the index prediction model to obtain the index prediction result, which may be specifically implemented as shown in FIG. 7:

S701, based on a short-term feature extraction module built based on the attention mechanism for the index prediction model, feature extraction is performed within a first feature extraction range in a plurality of texturing process architecture diagrams to obtain a short-term feature, where the first feature extraction range may include texturing process architecture diagrams of n moments centered on the texturing process architecture diagram of the target moment, and n is a positive integer. The short-term feature extraction module may use the texturing process architecture diagram of the target moment as a query feature, and use the texturing process architecture diagrams of the n moments other than the target moment as a key feature and a value feature to obtain short-term features.

For example, if there are a series of texturing process architecture diagrams, each diagram represents a process state of a specific moment. In embodiments of the present disclosure, it is desired to predict the process state of a certain time point in the future, and extract short-term features based on the attention mechanism in the historical data.

Therefore, the first feature extraction range, that is, the texturing process architecture diagrams of n moments centered on the target moment, may be first determined. If 5 moments are selected as the first feature extraction range, 2 moments before and after the current moment (target moment) may be selected respectively.

Next, feature extraction may be performed using the short-term feature extraction module. The module may use the texturing process architecture diagram of the target moment as the query feature, and use the texturing process architecture diagrams of the other four moments as the key feature and value feature, respectively. By calculating similarity between these features, the model may capture a correlation between different moments and tendency.

S702, based on a long-term feature extraction module built based on the attention mechanism for the index prediction model, feature extraction may be performed within a second feature extraction range in a plurality of texturing process architecture diagrams to obtain long-term features, where the second feature extraction range may include texturing process architecture diagrams of m moments centered on the texturing process architecture diagram of the target moment, and m is a positive integer greater than n. The long-term feature extraction module may be used to divide the texturing process architecture diagrams of m moments using a sliding window mechanism and determine pooling information in each sliding window, and build key features and value features required by the attention mechanism based on the pooling information of a plurality of sliding windows, to obtain long-term features based on the key features, value features, and query features.

For example, if there is a texturing process architecture diagram sequence of 100 moments, each moment may represent a different process state.

Therefore, the second feature extraction range, that is, the texturing process architecture diagram of m moments centered on the target moment, may be first determined. If 20 moments are selected as the second feature extraction range, 10 moments before and after the current moment (target moment) may be selected respectively.

Next, feature extraction may be performed using the long-term feature extraction module. The module may use a sliding window mechanism to divide the texturing process architecture diagram of these 20 moments and determine pooling information in each sliding window. For example, the size of one window may be set to be 5, and windows may be slid on these 20 moments. Assuming that the windows may or may not overlap, pooling information of at least 4 windows may be obtained. In each window, the model may build key features and value features based on the attention mechanism.

S703, after the short-term features and long-term features are obtained, a fusion operation is performed on the long-term feature and short-term feature using a fusion module to obtain a fused feature.

S704, the fused features are processed based on the prediction module to obtain the index prediction result.

In embodiments of the present disclosure, the short-term features in a plurality of texturing process architecture diagrams may be extracted by the short-term feature extraction module, and the long-term features in a plurality of texturing processes may be extracted by the long-term feature extraction module. The obtained short-term features and long-term features may be fused as input parameters of the prediction module to obtain the index prediction result. By extracting and fusing the long-term and the short-term features, data features may be captured more comprehensively when data parameters with different time scales are processed. In this way, the performance and effect of the prediction model in the texturing process may be improved.

Further, in some embodiments, in order to make the index prediction result obtained by the prediction model more accurate, the index prediction model may also include a supplementary feature extraction module, and the following operations may be performed based on the supplementary feature extraction module to obtain a supplementary feature, specifically:

the supplementary feature extraction module may perform data analysis on the second control parameter sequence to obtain the parameter cumulative difference of each moment in the second control parameter sequence relative to the first moment in the second control parameter sequence, to obtain a cumulative difference sequence; determine the duration of the moment when the cumulative difference is greater than the preset threshold relative to the first moment based on the cumulative difference sequence, to obtain a duration sequence; and perform feature extraction on the second control parameter sequence, the cumulative difference sequence and the duration sequence to obtain the supplementary feature.

For example, if there is a second control parameter sequence of 10 moments, each moment may represent a different control parameter value.

Therefore, the first moment needs to be determined as a reference moment first. In embodiments of the present disclosure, the first one moment may be selected as the first moment.

Next, the second control parameter sequence may be analyzed to calculate a parameter cumulative difference of each moment relative to the first moment. For example, if the control parameter value of the first moment is 10, and the control parameter value of the second moment is 12, then the cumulative difference of parameter of this moment is 2. By analogy, a new cumulative difference sequence may be obtained.

Then, the duration of the moment when the cumulative difference is greater than the preset threshold relative to the first moment may be determined based on the cumulative difference sequence. For example, if the preset threshold is 3, all moments with a cumulative difference greater than 3 may be found, and a duration between the moments and the first moment may be calculated. In this way, a new duration sequence may be obtained.

Finally, the second control parameter sequence, the cumulative difference sequence and the duration sequence may be input into the feature extraction module to obtain the supplementary feature.

Based on having the supplementary feature, the long-term feature, the short-term feature, and the supplementary feature may be fused using the fusion module to obtain the fused feature.

In embodiments of the present disclosure, by extracting the supplementary feature, more information about the second control parameter sequence may be obtained to help the model better understand and predict the future texturing process architecture diagram. By adding the extraction module, the prediction model may be further optimized to make the result of the prediction model more accurate.

In embodiments of the present disclosure, for the texturing process, the index prediction result may include at least one of yarn spindle level, qualified rate, full winding rate or dyeing uniformity.

In embodiments of the present disclosure, by predicting key indexes such as yarn spindle level, qualified rate, full winding rate and dyeing uniformity, problems may be found in time and measures may be taken for improvement, thereby reducing the defective rate and reducing the production cost.

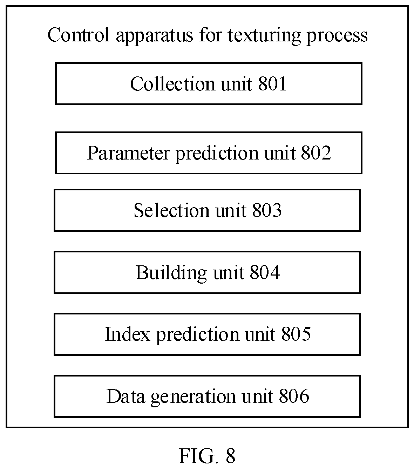

Based on the same technical concept, provided is a control apparatus for a texturing process according to the embodiment of the present disclosure, as shown in FIG. 8, including:

a collection unit 801 for sequentially collecting preset control parameters of a plurality of moments in the texturing process to obtain a first control parameter sequence;
a parameter prediction unit 802 for inputting the first control parameter sequence into a parameter prediction model to predict prediction parameters of a plurality of future moments;
a selection unit 803 for selecting a target parameter of a target moment from the prediction parameters of the plurality of moments;
a building unit 804 for building a second control parameter sequence containing the target parameter based on control parameters of a plurality of moments before and after the target moment;
an index prediction unit 805 for processing the second control parameter sequence based on an index prediction model to obtain an index prediction result; and
a data generation unit 806 for inputting the index prediction result into a data generation model in a case where the index prediction result does not meet a desired value, to obtain a desired control parameter for the target moment.

In some embodiments, the index prediction unit may include:

a generation subunit for generating a corresponding texturing process architecture diagram based on the control parameter of each moment in the second control parameter sequence, to obtain a plurality of texturing process architecture diagrams; and
a prediction subunit for inputting the plurality of texturing process architecture diagrams into the index prediction model to obtain the index prediction result.

In some embodiments, the generation subunit may be specifically used to:

for the control parameter of each moment in the second control parameter sequence, perform the following operations to generate the corresponding texturing process architecture diagram, respectively:
performing a standardization operation on a plurality of sub-parameters in the control parameter respectively to map the sub-parameters to a preset value range, to obtain the standard value of the sub-parameters; and
scaling the processing path of the POY yarn in the texturing process to an initialization image in proportion to obtain the corresponding texturing process architecture diagram of the moment;
where pixel points outside the processing path in the texturing process architecture diagram are set to the default value, pixel points corresponding to the sub-parameters in the control parameter on the processing path are set to the standard value of the sub-parameters, and pixel points not corresponding to the sub-parameters in the control parameter on the processing path are set to a target value different from the default value.

In some embodiments, the prediction subunit may be specifically used to:

based on a short-term feature extraction module built based on the attention mechanism for the index prediction model, perform feature extraction within a first feature extraction range in a plurality of texturing process architecture diagrams to obtain short-term features, where the first feature extraction range may include texturing process architecture diagrams of n moments centered on the texturing process architecture diagram of the target moment, and n is a positive integer. The short-term feature extraction module may use the texturing process architecture diagram of the target moment as a query feature, and use the texturing process architecture diagram of n moments other than the target moment as key features and value features to obtain short-term features;
based on a long-term feature extraction module built based on the attention mechanism for the index prediction model, perform feature extraction within a second feature extraction range in a plurality of texturing process architecture diagrams to obtain long-term features, where the second feature extraction range may include texturing process architecture diagrams of m moments centered on the texturing process architecture diagram of the target moment, and m is a positive integer greater than n. The long-term feature extraction module may be used to divide the texturing process architecture diagrams of m moments using a sliding window mechanism and determine the pooling information in each sliding window, and build the key features and value features required by the attention mechanism based on the pooling information of a plurality of sliding windows, to obtain long-term features based on the key features, value features, and query features;

perform a fusion operation on the long-term features and short-term features using a fusion module to obtain fused features; and

process the fused features based on the prediction module for the index prediction model to obtain the index prediction result.

In some embodiments, the index prediction model may also include a supplementary feature extraction module, and the prediction subunit may be also used to:

perform the following operations based on the supplementary feature extraction module to obtain a supplementary feature:

performing data analysis on the second control parameter sequence to obtain the parameter cumulative difference of each moment in the second control parameter sequence relative to the first moment in the second control parameter sequence; and

determining the duration of the moment when the cumulative difference is greater than the preset threshold relative to the first moment based on the cumulative difference sequence, to obtain a duration sequence; and

perform feature extraction on the second control parameter sequence, the cumulative difference sequence and the duration sequence to obtain the supplementary feature.

The prediction subunit may be also used to:

perform a fusion operation on the long-term feature, the short-term feature, and the supplementary feature using the fusion module to obtain fusion features.

In some embodiments, the index prediction results may include at least one of yarn spindle level, qualified rate, full winding rate or dyeing uniformity.

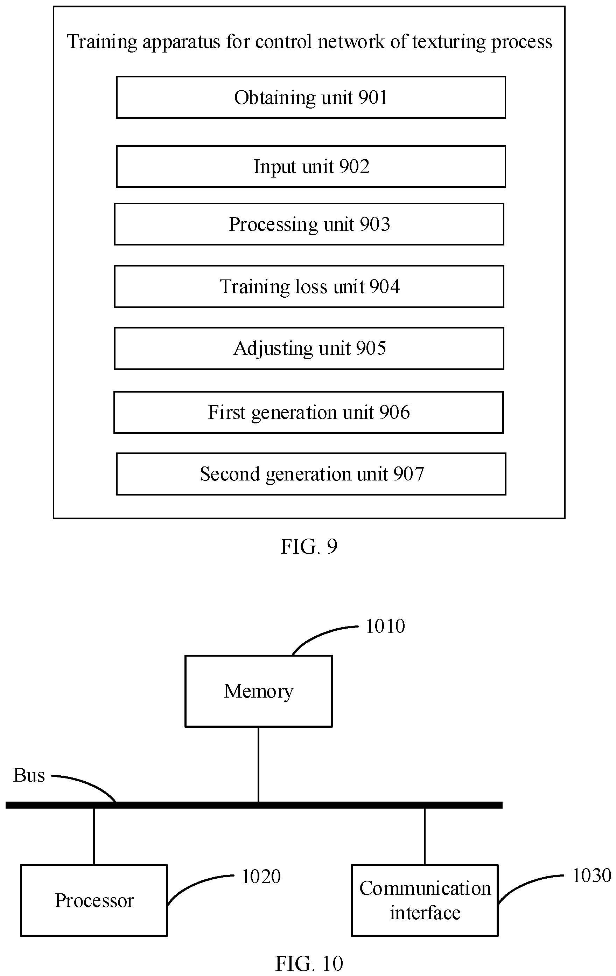

In embodiments of the present disclosure, provided is a training apparatus for a control network of a texturing process. The control network may include a parameter prediction subnetwork, an index prediction subnetwork and a data generation subnetwork, and as shown in FIG. 9, the training apparatus may include:

an obtaining unit 901 for obtaining a first training sample, where the first training sample includes preset control parameters of a plurality of moments in the texturing process;

an input unit 902 for inputting the first training sample into the parameter prediction subnetwork to obtain a parameter prediction value of at least one future moment;

a processing unit 903 for processing the parameter prediction value based on the index prediction subnetwork to obtain a prediction index;

a training loss unit 904 for determining a training loss based on a difference between the prediction index and a true index, and a difference between the parameter prediction value and a true parameter value;

an adjusting unit 905 for adjusting the parameter prediction subnetwork and the index prediction subnetwork based on the training loss;

a first generation unit 906 for obtaining a parameter prediction model corresponding to the parameter prediction subnetwork and an index prediction model corresponding to the index prediction subnetwork in a case where a training convergence condition is met; and

a second generation unit 907 for training the data generation subnetwork based on the parameter prediction model and the index prediction model, to obtain a data generation model, where the data generation model is used to generate desired control parameters of a texturing machine according to an index prediction result output by the index prediction model.

In some embodiments, the data generation subnetwork may include a generator to be trained and a discriminator to be trained, and the second generation unit may be specifically used to perform training on the data generation subnetwork for many loops, where each loop of training may perform the following operations:

inputting the true control parameter to the discriminator to be trained to obtain a first discrimination result of the discriminator to be trained on the true control parameter;

using the generator to be trained to generate a false control parameter;

inputting the false control parameter into the discriminator to be trained to obtain a second discrimination result;

adjusting the model parameter of the discriminator to be trained based on the first discrimination result and the second discrimination result; and

remaining the model parameter of the discriminator to be trained unchanged and training the generator to be trained.

Descriptions of specific functions and examples of each module, submodule, and subunit of the apparatus in embodiments of the present disclosure may refer to relevant descriptions of corresponding steps in the above method embodiments, and will not be described again here.

In the technical solution of the present disclosure, the acquisition, storage and application of the user's personal information involved are all in compliance with the provisions of relevant laws and regulations, and do not violate public order and good customs.

FIG. 10 is a block diagram of an electronic device according to an embodiment of the present disclosure. As shown in FIG. 10, the electronic device may include a memory 1010 and a processor 1020, and the memory 1010 may store a computer program executable on the processor 1020. The number of the memory 1010 and the processor 1020 may be one or more. The memory 1010 may store one or more computer programs, and when the one or more computer programs are executed by the electronic device, the electronic device is caused to perform the method provided by the above method embodiments. The electronic device may also include a communication interface 1030 which is used to communicate with an external device and performs data exchange transmission.

If the memory 1010, the processor 1020 and the communication interface 1030 are implemented independently, the memory 1010, the processor 1020 and the communication interface 1030 may be connected to each other via a bus and complete mutual communication. The bus may be an Industry Standard Architecture (ISA) bus, a Peripheral Component Interconnect (PCI) bus or an Extended Industry Standard Architecture (EISA) bus, etc. The bus may include an address bus, a data bus, a control bus, etc. For ease of representation, only one thick line is used to represent the bus in FIG. 10, but it does not mean that there is only one bus or one type of bus.

Optionally, in a specific implementation, if the memory 1010, the processor 1020 and the communication interface 1030 are integrated on a chip, the memory 1010, the processor 1020 and the communication interface 1030 can communicate with each other via internal interfaces.

It should be understood that the above processor may be a central processing unit (CPU), or other general-purpose processor, a digital signal processor (DSP), an application-specific integrated circuit (ASIC), a field programmable gate arrays (FPGA) or other programmable logic device, a discrete gate or a transistor logic device, a discrete hardware component, etc. The general-purpose processor may be a microprocessor or any conventional processor, etc. It is noticed that the processor may be a processor that supports the Advanced RISC Machines (ARM) architecture.

Further, optionally, the above memory may include a read-only memory and a random access memory, and may also include a non-volatile random access memory. The memory may be a volatile memory or a non-volatile memory, or may include both volatile and non-volatile memories. The non-volatile memory may include a read-only memory (ROM), a programmable read-only memory (PROM), an erasable programmable read-only memory (EPROM), an electrically erasable programmable read-only memory (EEPROM), or a flash memory. The volatile memory may include a random access memory (RAM), which may be used as an external cache. By way of example but not limitation, many forms of RAM are available. For example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM) and a direct RAMBUS RAM (DR RAM).

In the above embodiments, all or part of them may be implemented by software, hardware, firmware or any combination thereof. When implemented by software, they may be implemented in whole or in part in the form of a computer program product. The computer program product may include one or more computer instructions. When the computer instructions are loaded and executed on the computer, the process or function according to the embodiment of the present disclosure may be generated in whole or in part. The computer may be a general-purpose computer, a special-purpose computer, a computer network or other programmable apparatus. Computer instructions may be stored in a computer-readable storage medium, or transmitted from a computer-readable storage medium to another computer-readable storage medium. For example, computer instructions may be transmitted from one website, computer, server or data center to another website, computer, server or data center in a wired (e.g., coaxial cable, optical fiber, digital subscriber line (DSL)) or wireless (e.g., infrared, Bluetooth, microwave, etc.) manner. Computer-readable storage media may be any available medium accessible by a computer, or a data storage device such as a server or data center that includes one or more integrated available media. Available media may be magnetic media (e.g., floppy disks, hard disks, and tapes), optical media (e.g., digital versatile discs (DVD)) or semiconductor media (e.g., solid state drives (SSD)), etc. It is to be noted that the computer-readable storage medium mentioned in the present disclosure may be a non-volatile storage medium or a non-transient storage medium.

Those skilled in the art should understand that all or part of the steps to implement the above embodiments may be implemented by hardware, or may be implemented by instructing the relevant hardware through a program, and the program may be stored in a computer-readable storage medium, and the storage medium may be a read-only memory, a disk or an optical disk, etc.

In the description of the embodiments of the present disclosure, the description of the reference terms "an embodiment", "some embodiments", "an example", "a specific example", or "some examples" means that specific features, structures, materials or characteristics described in combination with the embodiment or example are included in at least one embodiment or example of the present disclosure. Moreover, the specific features, structures, materials or characteristics described may be combined in any one or more embodiments or examples in a suitable manner. In addition, in the absence of contradiction, those skilled in the art may combine different embodiments or examples described in this specification and the features of different embodiments or examples.

In the description of the embodiments of the present disclosure, unless otherwise specified, "/" means or. For example, A/B may mean A or B. "And/or" herein is only a kind of association relationship describing associated objects, indicating that there may be three relationships. For example, A and/or B may mean only A, both A and B, and only B.

In the description of embodiments of the present disclosure, terms "first" and "second" are used for descriptive purposes only and cannot be understood as indicating or implying relative importance or implicitly specifying the number of the indicated technical features. Therefore, the features defined as "first" and "second" may explicitly or implicitly include one or more of the features. In the description of embodiments of the present disclosure, unless otherwise specified, "a plurality of" means two or more.

The above are only example embodiments of the present disclosure and are not intended to limit the present disclosure. Any modifications, equivalent substitutions, improvements, etc. made within the principles of the present disclosure should be included in the scope of protection of the present disclosure.

**Claims**

1. A control method for a texturing process, comprising:

   sequentially collecting (S201) preset control parameters of a plurality of moments in the texturing process, to obtain a first control parameter sequence;
   inputting (S202) the first control parameter sequence into a parameter prediction model, to predict prediction parameters of a plurality of future moments;
   selecting (S203) a target parameter of a target moment from the prediction parameters of the plurality of moments;
   building (S204) a second control parameter sequence containing the target parameter based on control parameters of a plurality of moments before and after the target moment;
   processing (S205) the second control parameter sequence based on an index prediction model, to obtain an index prediction result; and
   inputting (S206) the index prediction result into a data generation model in a case where the index prediction result does not meet a desired value, to obtain a desired control parameter for the target moment.

2. The method of claim 1, wherein processing the second control parameter sequence based on an index prediction model, to obtain an index prediction result, comprises:

   generating a corresponding texturing process architecture diagram based on the control parameter of each moment in the second control parameter sequence, to obtain a plurality of texturing process architecture diagrams; and
   inputting the plurality of texturing process architecture diagrams into the index prediction model to obtain the index prediction result.

3. The method of claim 2, wherein generating the corresponding texturing process architecture diagram based on the control parameter of each moment in the second control parameter sequence, to obtain the plurality of texturing process architecture diagrams, comprises:
   for the control parameter of each moment in the second control parameter sequence, performing the following operations to generate the corresponding texturing process architecture diagram, respectively:

   performing (S501) a standardization operation on a plurality of sub-parameters in the control parameter respectively to map the plurality of sub-parameters to a preset value range, to obtain a standard value of the plurality of sub-parameters; and

scaling (S502) a processing path of a POY yarn in the texturing process to an initialization image in proportion, to obtain the corresponding texturing process architecture diagram of the moment,

wherein pixel points outside the processing path in the texturing process architecture diagram are set to a default value, pixel points corresponding to the plurality of sub-parameters in the control parameter on the processing path are set to the standard value of the plurality of sub-parameters, and pixel points not corresponding to the plurality of sub-parameters in the control parameter on the processing path are set to a target value different from the default value.

4. The method of claim 2 or claim 3, wherein inputting the plurality of texturing process architecture diagrams into the index prediction model to obtain the index prediction result, comprises:

based on a short-term feature extraction module built based on an attention mechanism for the index prediction model, performing feature extraction within a first feature extraction range in the plurality of texturing process architecture diagrams, to obtain a short-term feature, wherein the first feature extraction range includes texturing process architecture diagrams of n moments centered on the texturing process architecture diagram of the target moment, and n is a positive integer, and wherein the short-term feature extraction module uses the texturing process architecture diagram of the target moment as a query feature, and uses the texturing process architecture diagrams of the n moments other than the target moment as a key feature and a value feature to obtain the short-term feature (S701);

based on a long-term feature extraction module built based on the attention mechanism for the index prediction model, performing feature extraction within a second feature extraction range in the plurality of texturing process architecture diagrams to obtain a long-term feature, wherein the second feature extraction range includes texturing process architecture diagrams of m moments centered on the texturing process architecture diagram of the target moment, and m is a positive integer greater than n, and wherein the long-term feature extraction module is used to divide the texturing process architecture diagrams of the m moments using a sliding window mechanism and determine pooling information in each sliding window, and build the key feature and the value feature required by the attention mechanism based on pooling information of a plurality of sliding windows, to obtain the long-term feature based on the key feature, the value feature, and the query feature (S702);

performing a fusion operation on the long-term feature and the short-term feature using a fusion module, to obtain a fused feature (S703); and

processing the fused feature based on a prediction module for the index prediction model, to obtain the index prediction result (S704).

5. The method of claim 4, wherein the index prediction model further comprises a supplementary feature extraction module, and the method further comprises:

performing the following operations based on the supplementary feature extraction module to obtain a supplementary feature:

performing data analysis on the second control parameter sequence to obtain a parameter cumulative difference of each moment in the second control parameter sequence relative to a first moment in the second control parameter sequence, to obtain a cumulative difference sequence; and

determining a duration of a moment when the cumulative difference is greater than a preset threshold relative to the first moment based on the cumulative difference sequence, to obtain a duration sequence; and

performing feature extraction on the second control parameter sequence, the cumulative difference sequence and the duration sequence, to obtain the supplementary feature, wherein

performing the fusion operation on the long-term feature and the short-term feature using the fusion module to obtain the fused feature comprises:

performing the fusion operation on the long-term feature, the short-term feature, and the supplementary feature using the fusion module to obtain the fused feature.

6. The method of any one of claims 1-5, wherein the index prediction result comprises at least one of yarn spindle level, qualified rate, full winding rate or dyeing uniformity.

7. A training method for a control network of a texturing process, wherein the control network comprises a parameter prediction subnetwork, an index prediction subnetwork and a data generation subnetwork, and the method comprises:

obtaining (S301) a first training sample, wherein the first training sample includes preset control parameters of a plurality of moments in the texturing process;

inputting (S302) the first training sample into the parameter prediction subnetwork, to obtain a parameter prediction value of at least one future moment;

processing (S303) the parameter prediction value based on the index prediction subnetwork, to obtain a prediction index;

determining (S304) a training loss based on a difference between the prediction index and a true index, and a difference between the parameter prediction value and a true parameter value;

adjusting (S305) the parameter prediction subnetwork and the index prediction subnetwork based on the training loss;

obtaining (S306) a parameter prediction model corresponding to the parameter prediction subnetwork and an index prediction model corresponding to the index prediction subnetwork, in a case where a training convergence condition is met; and

training (S307) the data generation subnetwork based on the parameter prediction model and the index prediction model, to obtain a data generation model, wherein the data generation model is used to generate desired control parameters of a texturing machine according to an index prediction result output by the index prediction model.

8. The method of claim 7, wherein the data generation subnetwork comprises a generator to be trained and a discriminator to be trained, and the training the data generation subnetwork based on the parameter prediction model and the index prediction model, to obtain a data generation model, comprises:
performing training on the data generation subnetwork for many loops, wherein each loop of training performs the following operations:

inputting a true control parameter to the discriminator to be trained, to obtain a first discrimination result of the discriminator to be trained on the true control parameter;

using the generator to be trained to generate a false control parameter;

inputting the false control parameter into the discriminator to be trained, to obtain a second discrimination result;

adjusting a model parameter of the discriminator to be trained based on the first discrimination result and the second discrimination result; and

keeping the model parameter of the discriminator to be trained unchanged and training the generator to be trained.

9. A control apparatus for a texturing process, comprising:

a collection unit (801) configured to sequentially collect preset control parameters of a plurality of moments in the texturing process, to obtain a first control parameter sequence;

a parameter prediction unit (802) configured to input the first control parameter sequence into a parameter prediction model, to predict prediction parameters of a plurality of future moments;

a selection unit (803) configured to select a target parameter of a target moment from the prediction parameters of the plurality of moments;

a building unit (804) configured to build a second control parameter sequence containing the target parameter based on control parameters of a plurality of moments before and after the target moment;

an index prediction unit (805) configured to process the second control parameter sequence based on an index prediction model, to obtain an index prediction result; and

a data generation unit (806) configured to input the index prediction result into a data generation model in a case where the index prediction result does not meet a desired value, to obtain a desired control parameter for the target moment.

10. The apparatus of claim 9, wherein the index prediction unit comprises:

a generation subunit configured to generate a corresponding texturing process architecture diagram based on the control parameter of each moment in the second control parameter sequence, to obtain a plurality of texturing process architecture diagrams; and

a prediction subunit configured to input the plurality of texturing process architecture diagrams into the index prediction model, to obtain the index prediction result.

11. The apparatus of claim 10, wherein the generation subunit is specifically configured to:
for the control parameter of each moment in the second control parameter sequence, perform the following operations to generate the corresponding texturing process architecture diagram, respectively:

performing a standardization operation on a plurality of sub-parameters in the control parameter respectively to map the plurality of sub-parameters to a preset value range, to obtain a standard value of the plurality of sub-parameters; and
scaling a processing path of a POY yarn in the texturing process to an initialization image in proportion, to obtain the corresponding texturing process architecture diagram of the moment,
wherein pixel points outside the processing path in the texturing process architecture diagram are set to a default value, pixel points corresponding to the plurality of sub-parameters in the control parameter on the processing path are set to the standard value of the plurality of sub-parameters, and pixel points not corresponding to the plurality of sub-parameters in the control parameter on the processing path are set to a target value different from the default value.

12. The apparatus of claim 10 or claim 11, wherein the prediction subunit is specifically configured to:

based on a short-term feature extraction module built based on an attention mechanism for the index prediction model, perform feature extraction within a first feature extraction range in the plurality of texturing process architecture diagrams, to obtain a short-term feature, wherein the first feature extraction range includes texturing process architecture diagrams of n moments centered on the texturing process architecture diagram of the target moment, and n is a positive integer, and wherein the short-term feature extraction module uses the texturing process architecture diagram of the target moment as a query feature, and uses the texturing process architecture diagrams of the n moments other than the target moment as a key feature and a value feature to obtain the short-term feature;
based on a long-term feature extraction module built based on the attention mechanism for the index prediction model, perform feature extraction within a second feature extraction range in the plurality of texturing process architecture diagrams to obtain a long-term feature, wherein the second feature extraction range includes texturing process architecture diagrams of m moments centered on the texturing process architecture diagram of the target moment, and m is a positive integer greater than n, and wherein the long-term feature extraction module is used to divide the texturing process architecture diagrams of the m moments using a sliding window mechanism and determine pooling information in each sliding window, and build the key feature and the value feature required by the attention mechanism based on pooling information of a plurality of sliding windows, to obtain the long-term feature based on the key feature, the value feature, and the query feature;
perform a fusion operation on the long-term feature and the short-term feature using a fusion module, to obtain a fused feature; and
process the fused feature based on a prediction module for the index prediction model, to obtain the index prediction result.

13. The apparatus of claim 12, wherein the index prediction model further comprises a supplementary feature extraction module, and the prediction subunit is further configured to:

perform the following operations based on the supplementary feature extraction module to obtain a supplementary feature:

performing data analysis on the second control parameter sequence to obtain a parameter cumulative difference of each moment in the second control parameter sequence relative to a first moment in the second control parameter sequence, to obtain a cumulative difference sequence; and
determining a duration of a moment when the cumulative difference is greater than a preset threshold relative to the first moment based on the cumulative difference sequence, to obtain a duration sequence; and

perform feature extraction on the second control parameter sequence, the cumulative difference sequence and the duration sequence, to obtain the supplementary feature, and
the prediction subunit is further configured to:
perform the fusion operation on the long-term feature, the short-term feature, and the supplementary feature using the fusion module to obtain the fused feature.

14. A training apparatus for a control network of a texturing process, wherein the control network comprises a parameter prediction subnetwork, an index prediction subnetwork and a data generation subnetwork, and the training apparatus comprises:

an obtaining unit (901) configured to obtain a first training sample, wherein the first training sample includes preset control parameters of a plurality of moments in the texturing process;

an input unit (902) configured to input the first training sample into the parameter prediction subnetwork, to obtain a parameter prediction value of at least one future moment;

a processing unit (903) configured to process the parameter prediction value based on the index prediction subnetwork, to obtain a prediction index;

a training loss unit (904) configured to determine a training loss based on a difference between the prediction index and a true index, and a difference between the parameter prediction value and a true parameter value;

an adjusting unit (905) configured to adjust the parameter prediction subnetwork and the index prediction subnetwork based on the training loss;

a first generation unit (906) configured to obtain a parameter prediction model corresponding to the parameter prediction subnetwork and an index prediction model corresponding to the index prediction subnetwork, in a case where a training convergence condition is met; and

a second generation unit (907) configured to train the data generation subnetwork based on the parameter prediction model and the index prediction model, to obtain a data generation model, wherein the data generation model is used to generate desired control parameters of a texturing machine according to an index prediction result output by the index prediction model.

15. A non-transitory computer-readable storage medium storing a computer instruction thereon, wherein the computer instruction, when executed by a computer, causes the computer to perform the method of any one of claims 1-8.

FIG. 1

S201

Sequentially collecting preset control parameters of a plurality of moments in the texturing process to obtain a first control parameter sequence

S202

Inputting the first control parameter sequence into a parameter prediction model to predict prediction parameters of a plurality of future moments

S203

Selecting a target parameter of a target moment from the prediction parameters of the plurality of moments

S204

Building a second control parameter sequence containing the target parameter based on control parameters of a plurality of moments before and after the target moment

S205

Processing the second control parameter sequence based on an index prediction model to obtain an index prediction result

S206

Inputting the index prediction result into a data generation model in a case where the index prediction result does not meet a desired value, to obtain a desired control parameter for the target moment

FIG. 2

S301

Obtaining a first training sample, where the first training sample includes preset control parameters of a plurality of moments in the texturing process

S302

Inputting the first training sample into the parameter prediction subnetwork to obtain a parameter prediction value of at least one future moment

S3021

Disentangling the input first training sample and decomposing same into a time-variant component and a time-invariant component

S3022

For the time-invariant component, using a time-invariant Koopman predictor to extract an embedded feature of the time-invariant component as a first parameter prediction value

S3023

For the time-variant component, using a time-variant Koopman predictor to extract an embedded feature and residual of the time-variant component as a second parameter prediction value

S303

Processing the parameter prediction value based on the index prediction subnetwork to obtain a prediction index

S3031

When the parameter prediction value is a third parameter sequence built by the parameters of a plurality of moments, selecting a specified parameter of a specified moment from the third parameter sequence, and based on the obtained specified parameter, building a control parameter sample of the plurality of moments based on the moment of the specified parameter to obtain a fourth control parameter sequence

S3032

Processing the fourth control parameter sequence based on the index prediction subnetwork to obtain the prediction index

S304

Determining a training loss based on a difference between the prediction index and a true index, and a difference between the parameter prediction value and a true parameter value

S305

Adjusting the parameter prediction subnetwork and the index prediction subnetwork based on the training loss

S306

Obtaining a parameter prediction model corresponding to the parameter prediction subnetwork and an index prediction model corresponding to the index prediction subnetwork in a case where a training convergence condition is met

S307

Training the data generation subnetwork based on the parameter prediction model and the index prediction model, to obtain a data generation model, where the data generation model is used to generate desired control parameters of a texturing machine according to an index prediction result output by the index prediction model; where the generation subnetwork may include a generator to be trained and a discriminator to be trained, and the data generation subnetwork may be trained based on the parameter prediction model and the index prediction model to obtain the data generation model

FIG. 3

a                          b

FIG. 4

S501

Performing a standardization operation on a plurality of sub-parameters in the control parameter respectively to map the sub-parameters to a preset value range, to obtain a standard value of the sub-parameters

S502

Scaling the processing path of the POY in the texturing process to an initialization image in proportion, to obtain the texturing process architecture diagram corresponding to the moment, where pixel points outside the processing path in the texturing process architecture diagram are set to a default value, pixel points corresponding to the sub-parameters in the control parameter on the processing path are set to the standard value of the sub-parameters, and pixel points not corresponding to the sub-parameters in the control parameter on the processing path are set to a target value different from the default value

FIG. 5

FIG. 6

S701

Based on a short-term feature extraction module built based on the attention mechanism for the index prediction model, performing feature extraction within a first feature extraction range in a plurality of texturing process architecture diagrams to obtain short-term features, where the first feature extraction range includes texturing process architecture diagrams of n moments centered on the texturing process architecture diagram of the target moment, and n is a positive integer. The short-term feature extraction module uses the texturing process architecture diagram of the target moment as a query feature, and uses the texturing process architecture diagram of n moments other than the target moment as a key feature and a value feature to obtain a short-term feature

S702

based on a long-term feature extraction module built based on the attention mechanism for the index prediction model, performing feature extraction within a second feature extraction range in a plurality of texturing process architecture diagrams to obtain long-term features, where the second feature extraction range includes texturing process architecture diagrams of m moments centered on the texturing process architecture diagram of the target moment, and m is a positive integer greater than n. The long-term feature extraction module is used to divide the texturing process architecture diagrams of m moments using a sliding window mechanism and determine the pooling information in each sliding window, and build key features and value features required by the attention mechanism based on pooling information of a plurality of sliding windows, to obtain a long-term feature based on the key feature, the value feature, and the query feature

S703

after obtaining the short-term features and long-term features, performing a fusion operation on the long-term feature and the short-term feature using a fusion module to obtain a fused feature

S704

processing the fused feature based on the prediction module to obtain the index prediction result

FIG. 7

Control apparatus for texturing process

Collection unit 801

Parameter prediction unit 802

Selection unit 803

Building unit 804

Index prediction unit 805

Data generation unit 806

FIG. 8

## Training apparatus for control network of texturing process

Obtaining unit 901

Input unit 902

Processing unit 903

Training loss unit 904

Adjusting unit 905

First generation unit 906

Second generation unit 907

FIG. 9

1010

Memory

Bus

1020

Processor

1030

Communication interface

FIG. 10

## EUROPEAN SEARCH REPORT

| | Application Number |
|---|---|
| | EP 24 21 5943 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/169715 A1 (LAKSHMINARAYANA KRISHNA BHARGAVA MULLIA [US] ET AL) 1 June 2023 (2023-06-01) | 1-5,7-15 | INV. G05B13/02 |
| A | * the whole document * | 6 | |
| X | US 2022/147734 A1 (HOOVER KEITH [US]) 12 May 2022 (2022-05-12) * the whole document * | 1,6,7,9, 14,15 | |
| X | CN 111 754 532 A (TENCENT TECH SHENZHEN CO LTD) 9 October 2020 (2020-10-09) * the whole document * | 1,7,9, 14,15 | |
| X | CN 116 575 208 A (YANTAI YELIN TEXTILE PRINTING & DYEING CO LTD ET AL.) 11 August 2023 (2023-08-11) * the whole document * | 1,7,9, 14,15 | |

| TECHNICAL FIELDS SEARCHED (IPC) |
|---|
| G05B G06N G06V |

The present search report has been drawn up for all claims

| Place of search | Date of completion of the search | Examiner |
|---|---|---|
| The Hague | 7 May 2025 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 5943

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2025

| Patent document cited in search report | Publication date | Patent family member(s) | | Publication date |
|---|---|---|---|---|
| US 2023169715 A1 | 01-06-2023 | NONE | | |
| US 2022147734 A1 | 12-05-2022 | CN | 115667606 A | 31-01-2023 |
| | | EP | 4244417 A1 | 20-09-2023 |
| | | US | 2022147734 A1 | 12-05-2022 |
| | | US | 2024054796 A1 | 15-02-2024 |
| | | WO | 2022104322 A1 | 19-05-2022 |
| CN 111754532 A | 09-10-2020 | NONE | | |
| CN 116575208 A | 11-08-2023 | NONE | | |

EPO FORM P0459

For more details about this annex : see Official Journal of the European Patent Office, No. 12/82